# EUROPEAN PATENT SPECIFICATION

(11) **EP 2 526 037 B1**
(45) Date of publication and mention of the grant of the patent: **08.03.2017**
(21) Application number: 11709199.1
(22) Date of filing: 14.01.2011
(51) Int. Cl.: B65G 47/51

(54) **STORAGE UNIT FOR TUBULAR WINDING CORES**
SPEICHEREINHEIT FÜR RÖHRENFÖRMIGE WICKELKERNE
UNITÉ DE STOCKAGE POUR NOYAUX D'ENROULEMENT TUBULAIRES

(30) Priority: 22.01.2010 IT FI20100009
(43) Date of publication of application: 28.11.2012
(73) Proprietor: Fabio Perini S.p.A., 55100 Lucca (IT)
(72) Inventor: GELLI Mauro, 55066 Capannori (LU) (IT); CICALINI, Giancarlo, 55062 Castelvecchio di Compito (LU) (IT)
(74) Representative: Mannucci, Michele
(86) International application number: PCT/IT2011/000012
(87) International publication number: WO 2011/089634

(56) References cited:
- WO-A1-90/06692
- WO-A1-2004/041689
- DE-A1- 2 607 486
- GB-A- 776 832
- JP-A- 62 083 908
- US-A- 2 709 412
- US-A- 2 726 753
- US-A- 2 799 384
- US-A- 4 028 791
- US-A- 4 309 938
- US-A- 4 751 996
- US-A- 6 152 670

## Description

### Technical Field

The present invention relates to improvements to storage units or containers for tubular winding cores, for example, although not exclusively, for use in the filed of paper converting.

### State of the Art

In many industrial sectors it is necessary to wind a continuous web material around tubular winding cores to form rolls of said web material. Typically in paper converting, for producing toilet paper, kitchen towels or the like, a continuous web cellulosic material, usually tissue paper, is unwound from large reels and wound around tubular winding cores to form so-called logs or rolls having a diameter equal to the diameter of the rolls destined for the final consumption and an axial length multiple of the length of the rolls destined for consumption. These rolls or logs are then cut, and the resulting small rolls are packaged to be sold. Winding occurs in so-called rewinding machines, to which tubular winding cores are fed from a storage unit. Rewinding machines for this use are known to those skilled in the art, and they will not be described hereafter.

Usually, tubular cores are made of cardboard, by winding one or more cardboard strips around a spindle in specific machines, called corewinders.

Tubular cores are generally accumulated in boxes near the production line, where the rewinder is arranged, and are singularly taken and inserted in a feed path towards the rewinder. Cores are taken from the lower area of the boxes, and forward movement of the cores inside the box occurs through gravity. An agitator member is generally provided for maintaining the cores moving, thus avoiding bunching and therefore feedblock.

These storage systems are particularly easy to be constructed, but have some drawbacks. Firstly, the tubular winding cores are stacked one over the other, thus forming a significant mass. The tubular cores in the lower area of the box can be therefore damaged due to the weight of the cores above. Furthermore, cores are inserted randomly, and taken from the lower area of the storage unit or container randomly, so that it is possible that some cores remain inside the box for very long times before being taken, with the risk of damage. The more the axial dimensions of the cores increase, the more the risk of feedblock and/or of damage of the cores increases.

Insertion of a damaged tubular winding core inside the rewinder can block the rewinder and therefore all the line, resulting in production losses. One or more operators are necessary for putting back the line in operation. This requires even long down times, with high production losses, as the throughput rate of these lines can be greater than 1000m/min.

Furthermore, modern rewinders produce a significantly high number of rolls per minute, and require therefore to be fed with tubular winding cores at a very high rate, typically with intervals from 1 to 4 seconds. The storage unit must thus guarantee an efficient and reliable feed of the tubular winding cores at high speed, what is not guaranteed by the storage units of the type described above.

For accumulating and feeding tubular winding cores of high length, necessary for the modern rewinders that can produce logs or rolls with axial lengths of some meters, particularly complex storage units have been developed, similar to the storage containers for the rolls exiting from the rewinder. In these storage systems the tubular winding cores are supported on chains defining a continuous zigzag path, formed by vertically developed ascending and descending branches of the chains. Storage units of this type are described in US-B-7258221 and US-A-6840368.

These storage units are particularly efficient, guarantee a reliable feeding, also with high rates, of tubular winding cores to the rewinders, and guarantee a constant permanence of each tubular winding core inside the storage unit or container. These are in fact storage units or containers of the FIFO type, i.e. "First-In-First-Out" type. Their structure is however highly complex.

US 2,726,753 discloses a storage unit, which corresponds to the preamble of claim 1.

### 25 Summary of the Invention

According to one aspect, the invention provides for a storage unit which partially or completely overcomes one or more of the drawbacks of the traditional storage units. The storage unit according to the invention is defined in claim 1.

More specifically, a storage unit for tubular winding cores is provided, comprising an entrance, an exit and an accumulation area between the entrance and the exit, in which a feeding path for the tubular winding cores is provided. The feeding path is formed by feeding channels mutually overlapping and connected by means of preferably curve descending branches allowing falling by gravity from a feeding channel to the feeding channel below. The tubular winding cores gather along the feeding path resting one on the other, i.e. into contact one with the other.

According to the invention, an entrance elevator is provided to raise the tubular winding cores to a height greater than the entrance and insert them in said feeding path. The storage unit or container formed in this way is of the First-In-First-Out type, and the tubular winding cores are subjected to minimum stresses. They move in an ordered manner, without the risk of stresses or blocks inside the feeding path. The structure of the storage unit is extremely simple and economical, although it guarantees at the same time a high reliability and efficiency in managing tubular winding cores even of great axial dimensions and that must be fed at high rate.

An exit elevator is provided, designed so as to take the tubular winding cores from a lower end of the feeding path and lift them to a greater height, where said exit is located.

In some embodiments, the feeding path develops in a zigzag manner, from the top downwards, and the tubular winding cores are transferred from one to the other of the overlapping channels, moving in each channel and in the channel immediately below in opposite directions.

Each feeding channel has preferably a nearly rectilinear development, but channels in other shape can be also provided, for example in the shape of an arch.

In some embodiments each feeding channel is nearly horizontal. Forward movement of the cores in each channel can occurs due to the effect of gravity and inertia: each core falls into the channel from a higher level and moves forward along the channel towards the end opposite to the end from which it has been inserted. To facilitate rolling, the channels can be slightly inclined from the top downwards and from the entrance end to the exit end.

Along at least some feeding channels a conveyor for the tubular winding cores is provided, developing from an entrance end to an exit end of the corresponding feeding channel. Preferably each channel will be provided with at least one conveyor. Conveyors help the forward movement of the cores along the respective channels, so that horizontal channels in the place of inclined channels can be provided. Conveyors also assure that the tubular winding cores are always arranged adjacent to each other the entire feeding path, thus guaranteeing a more regular and reliable operation of the storage unit.

Further features and embodiments of the invention will be described hereinafter.

### Brief description of the drawings

The invention will be better understood by means of the description below and the attached drawing, which shows a non-restrictive practical embodiment of the invention. More in particular, in the drawings:
figure 1 shows a side view of an empty storage unit, i.e. without cores inside it, according to the invention;
figure 2 shows an enlarged side view of one of the core feeding channels;
figure 3 shows a view and partial section according to III-III of figure 2; and
figure 4 shows a side view analogous to that of figure 1 of the storage unit or container full of tubular winding cores.

### Detailed description of the invention

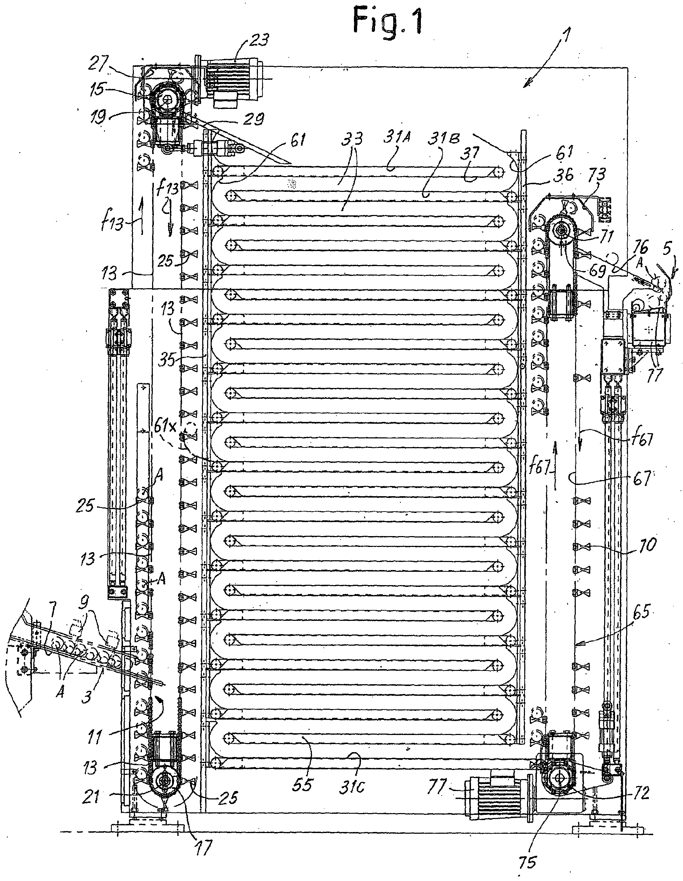

With initial reference to figure 1, in one embodiment the storage unit, indicated as a whole with number 1, comprises an entrance 3 and an exit 5. The tubular winding cores enter the storage unit 1 from the entrance 3 and exit from the storage unit 1 through the exit 5 which, in this embodiment, is located at a higher level than to the entrance 3. The height of the entrance 3 and of the exit 5 depend upon the structure of the machines upstream and downstream of the storage unit, typically a corewinder upstream of the entrance 3 and a rewinder downstream from the exit 5.

In some embodiments, to the entrance 3 of the storage unit 1 a slide 7 can be associated, with which detectors 9, for example photocell detectors, can be combined, detecting the presence and/or the number of tubular winding cores A waiting on the entrance slide 7 that must be taken and inserted in a feeding path, described below and arranged inside the storage unit 1. The signals from the detectors 9 are used, for instance, to control the picking-up rate of the tubular winding cores A from the entrance 3, so as to prevent an excessive number of tubular cores from gathering on the entrance slide 7.

The cores fed along the entrance slide 7 are picked-up singularly by an entrance elevator 11. The latter is formed by one or more chains 13 or by other continuous flexible members. Figure 1 shows a single chain 13, but it must be understood that two or more chains 13, adjacent to each other and developing along a path equal for the various chains 13, will be provided in a storage unit 1. In figure 1 the chains 13 therefore overlap. The chains 13 are entrained around upper guiding wheels 15 and lower guiding wheels 17, keyed on respective shafts 19 and 21. The shaft 19, in the example represented in the drawings, is motorized through a motor 23 that moves the chains 13 according to the arrow f13. In some embodiments, the motor 23 can control the motion of the chains 13 continuously, with a speed variable according to the number of tubular cores A on the entrance slide 7, detected by means of the detectors 9. In this way a more regular operation of the storage unit is obtained. In other embodiments, the chains 13 can move intermittently.

Shaped supports 25 are fixed along the chains 13 at regular steps. Each support 25 has a double V-shape defining, superiorly and inferiorly, respective cradles for supporting the tubular winding cores A. The tubular winding cores A are therefore taken singularly from the supports 25, that are arranged on the ascending branch of the chains 13, they are lifted to the guiding wheels 15 and transferred around these wheels, and then go down along the descending branch of the chains 13, passing from the cradle defined by a first support 25 to the cradle defined by the support 25 immediately downstream of, and opposite to, it. Around the guiding wheels 15 a guiding profile 27 is arranged to prevent the tubular winding cores A from falling during the rotation movement around the upper guiding wheels 15.

Along the descending path of the chains 13 of the entrance elevator 11 at least one unloading element is arranged, that causes the unload of the tubular winding cores A from the support 25 of the chains 13 towards the feeding path defined inside the storage unit 1. In the illustrated embodiment an upper unloading element 29 is provided, formed by one or more inclined profiles that intersect the descending trajectory of the entrance elevator 11 and extend downward to about the height of a first conveyor 31 of a plurality of analogous overlapping conveyors defining, in the manner described below, feeding channels for the tubular winding cores forming a feeding path from the top downward to an exit elevator, described below, which takes the tubular winding cores in the lower area of the storage unit 1 and transfers them to the exit 5.

More in particular, in the illustrated example the storage unit 1 comprises a plurality of feeding channels 33, arranged so as to form a zigzag path for the tubular winding cores A, which develops from the top downward. The feeding channels 33 are defined by substantially horizontal and parallel branches of a plurality of feeding conveyors, labeled 31 and more precisely subdivided into two series formed by conveyors indicated respectively with 31 A and 31B.

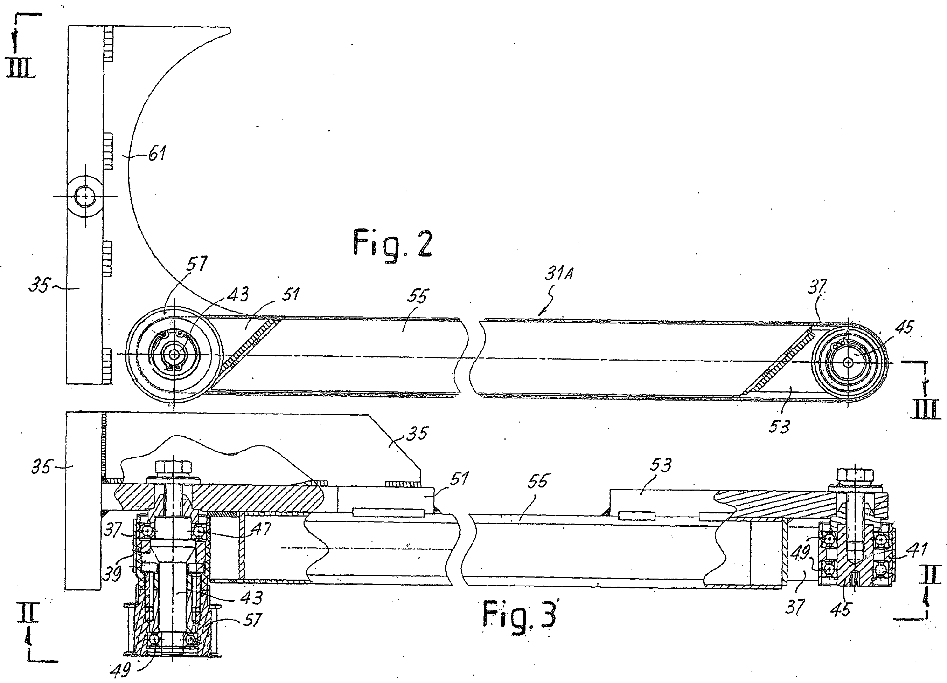

Figures 2 and 3 show a side view and respectively a plan view and partial section of one of the conveyors 31A. The conveyors 31A are substantially equal to each other, and the conveyors 31B are substantially symmetrical to the conveyors 31A, and therefore they will not be described in detail.

The conveyors 31 A are carried by a first fixed structure 35. Each conveyor is formed by a belt 37 (see in particular figures 2 and 3) driven around two rollers 39 and 41 that are mounted on fixed pins 43 and 45 with interposition of supports 47 and 49. The pins 43 and 45 are blocked on plates 51 and 53 connected to each other through a box beam 55. The plates 51, 53 and the box beam 55 form a support for the conveyor 31, connected to the bearing structure 35. In some embodiments the pin 43 has a length greater than that of the pin 45, and the roller 39 is torsionally coupled to a pulley 57 which is moved by a preferably toothed belt, not shown, that puts the belt 37 of the conveyor 31 in motion. The belts 37 of the single conveyors 31A can be moved by a single toothed belt driven around all the toothed pulleys 57 of the conveyors 31A supported by the structure 35.

As mentioned above, the conveyors 31B have a structure substantially symmetrical to that of the conveyors 31A and are carried by a second structure 36. Structures 35 and 36 are connected to each other and form a part of the fixed structure of the storage unit 1.

The conveyors 31A are arranged spaced from one another and vertically overlapping, at such a mutual distance to allow interposition between them of respective conveyors 31B, that are also vertically overlapping and spaced from one another by the same mutual distance. The series of conveyors 31A and 31B form substantially respective comb-like arrangements carried by the structures 35 and 36, the conveyors 31B being inserted between the conveyors 31 A, the various conveyors 31A, 31B being arranged at substantially regular intervals. This arrangement of the conveyors 31A and 31B defines the core feeding channels 33. Each channel is therefore delimited by the upper branch of a conveyor below and by a lower branch of a conveyor above.

In front of the free ends of each conveyor 31 A, 31 B, the structures 36 and 35 support shaped profiles 61. The profiles 61 form guiding surfaces for unloading the tubular cores from a feeding channel 33 above towards a feeding channel 33 below. In some embodiments the profiles 61 have a shape substantially of an arc of circle.

The channels 33 and the profiles 61 define a zigzag path developing from the top near the upper profile or unloading element 29 downwards to a lower conveyor indicated with 31C and carried by the structure 35. This latter conveyor 31C is substantially equal to the conveyors 31 A, but is longer than the conveyors 31 A and 31B, and extends with its farthest end from the bearing structure 35 until it interferes with the ascending branch of an exit elevator 65.

In the illustrated example the exit elevator 65 has two or more chains or other continuous flexible members 67. The picture shows a single chain 67 but, analogously to what has been described in connection with the chains 13 of the entrance elevator 11, the exit elevator 65 has two or more chains 67 overlapping and developing along identical paths defined between upper guiding wheels 69, keyed on a shaft 71, and lower guiding wheels 72, keyed on a shaft 75. The latter is advantageously motorized by a motor 77, that moves the chains 67 according to the arrows f67. The forward speed of the chains 67 can be controlled according to the speed of the machines downstream of the storage unit 1, for example according to the production rate of the rewinder.

On the chains 67 supports 70 are fixed at regular intervals, shaped as the supports 25 described above with reference to the entrance elevator 11.

The tubular winding cores A conveyed by the lower conveyor 31C towards the exit elevator 65 are taken singularly from the supports 70 and transferred from the bottom upwards until they rotate around the guiding wheels 69. To prevent the tubular winding cores A from falling accidentally, a guide 73 is provided around the wheels 69. Along the descending branch of the chains 67 an exit chute 76 is arranged, that takes single tubular winding cores from the supports 70 and make them roll toward an exit conveyor belt 77. The conveyor belt 77 develops according to a direction substantially orthogonal to the plane of figures 1 and 3 and transfers the tubular winding cores towards a rewinder or other machine arranged in the web material processing line with which the rolls wound around the single tubular winding cores A must be formed. The height of the exit slide 76 and of the exit conveyor belt 77 can be adjusted.

The storage unit described above operates as described below.

The tubular winding cores A coming from a corewinder, not shown, are conveyed along the slide 3 towards the entrance of the storage unit 1. The single cores A are taken from the supports 25 of the entrance conveyor 11 along the ascending branch of the chains 13.

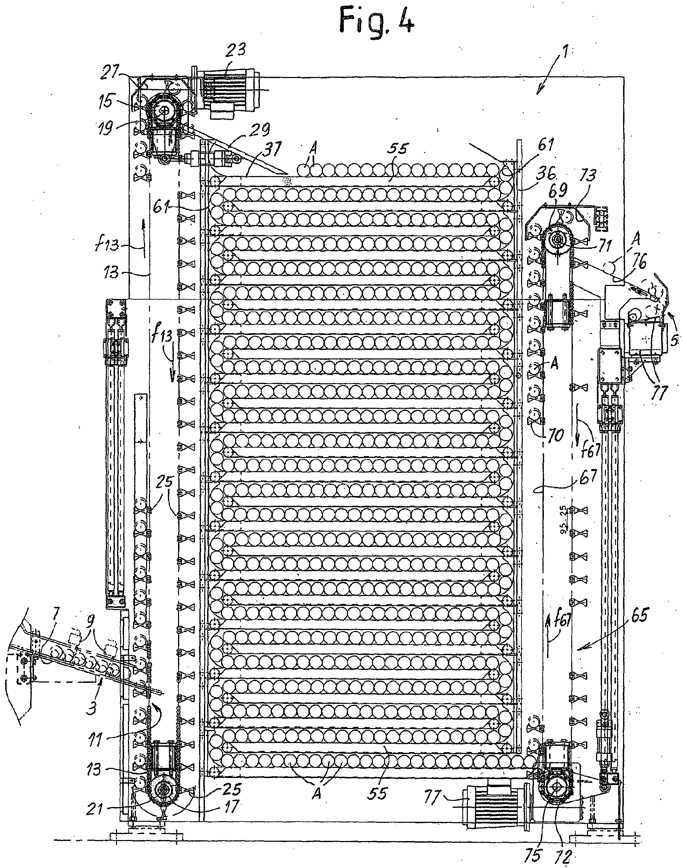

Through movement, according to f13, of the chains 13 of the entrance conveyor 11, the tubular winding cores A are lifted and unloaded along the upper profile or unloading element 29. The cores fall onto the first conveyor 31A by gravity, and move from left to right (in the drawing) towards the guiding profile 61 opposite to the upper profile or unloading element 29. The guiding profile 61 make the single tubular winding cores A fall onto the rest surface formed by the first conveyor 31A downwards inside the channel 33 below, defined between the lower branch of the first conveyor 31A and the upper branch of the second conveyor 31B. From here the tubular winding cores continue to move forward along a zigzag path (see in particular figure 4) downward until it reaches the lower longer conveyor 31C. The tubular winding cores A move forward along all this path due to the combined effect of gravity and movement of conveyors 31A and 31B. The latter are advantageously and preferably maintained in continuous motion, and facilitate the forward movement of the cores along the zigzag path. The reciprocal distance between the conveyors 31A and 31 B is such that in each channel 33 the tubular winding cores A rest on the upper branch of the conveyor 31A or 31B defining the lower supporting surface for the tubular winding cores A in the channel, without touching the lower branch of the conveyor above.

Figure 4 shows the storage unit 1 in a substantially full condition. The tubular winding cores A filling it are adjacent to each other in reciprocal contact. The conveyors 31A and 31B can continue to move, sliding below the cores A. In this way it is guaranteed that the tubular winding cores A are arranged in the most compact manner, filling all the available space along the zigzag path defined by the channels 33 and by the descending joining paths between a channel 33 and the channel below defined by the guiding profile 61. It is understood that the storage unit formed in this way is of the First-In-First-Out type, wherein the exit order of the tubular winding cores is equal to the entrance order, and therefore the risk is avoided that a single winding core remains inside the storage unit for an excessive time. Each tubular winding core A is in contact with the preceding core and the subsequent core, being subjected to a negligible stress and therefore without being subjected to risks of breakage or deformation. By providing, along the transverse direction (orthogonal to the plane of the figures) of the storage unit 1, an adequate number of conveyors 31A, 31B for each channel 33 (for instance two, three or four adjacent conveyors for each level), the cores are adequately supported from the bottom and cannot deform flexurally, even if they are very long and/or produced with a very thin cylindrical wall.

The single tubular winding cores are taken from the exit end of the lower conveyor 31C by means of the exit elevator 65, they are lifted to the guiding wheels 69 and unloaded along the chute 76, from which the conveyor belt 77 feed them to the rewinder or other machine for the processing line in which they are used to form rolls.

When the storage unit 1 is completely empty, as shown in figure 1, or almost completely empty, if all the tubular winding cores A are loaded by means of the upper profile or unloading element 29, some time elapses before the new tubular winding cores A achieve the lower part of the storage unit 1. This can be disadvantageous in some circumstances. For instance, when the corewinder upstream of the storage unit 1 stops, whilst the rewinder downstream continuous to work at full capacity, the number of cores gathered in the storage unit 1 can decrease quickly. If the corewinder is restarted when the storage unit 1 is almost empty, unloading the tubular winding cores A in the upper area of the storage unit 1 by means of the upper profile or unloading element 29, it can occur that the first tubular winding cores arrive on the lower conveyor 31C when it is already empty. The rewinder in this case should be slowed down or even stopped. To avoid this, the storage unit of the invention provides that in some conditions the tubular winding cores A are unloaded from the entrance conveyor 11 at a height lower than the entrance profile or unloading element 29. For this purpose, it is sufficient to displace the entrance profile or unloading element 29, so that it does not interfere with the descending path of the conveyor 11, and to insert an intermediate profile or unloading element along the descending branch of the conveyor 11 at a height lower than the profile 29, for example at mid height or nearer the conveyor 31C. In some embodiments several intermediate profiles can be provided along the descending branch of the conveyor 11. In the example of figure 1, a profile 61X is shown in dotted line at about the halfway point of the height of the conveyor 11. The profile 61X can be one of the profiles 61, angularly displaced to take the position shown in figure 1 in dotted line. In this position the profile 61X intersects the descending path of the tubular winding cores A and causes their unload from the supports 25 and the insertion in the corresponding channel 33.

With such an arrangement, bringing the profile 61X in the position shown in dotted line in figure 1 and moving the profile 29 away from the descending path of the tubular winding cores A, it is possible to unload the cores in the zigzag path to a position nearer the exit, filling the lower part of the storage unit 1 fastest. In other embodiments more intermediate profiles 61X can be provided at different height, that can be put in, and cleared off, the respective work position according to the production requirements.

In other embodiments one or more fixed profiles 61X and removable profiles 61 can be provided to allow the entrance of the tubular winding cores intercepted by the fixed profiles 61X.

It is understood that the drawing merely shows a practical embodiment of the invention, which may vary in forms and arrangements without however departing from the scope of the the invention defined by the appended claims. Any reference numbers in the claims are provided for the sole purpose of facilitating the reading thereof in the light of the description hereinbefore and the accompanying drawings and do not in any way limit the scope of protection of the present invention.

## Claims

1. A storage unit for tubular winding cores(A), comprising an entrance (3), an exit (5) and an accumulation area between said entrance and said exit, a feeding path for said tubular winding cores being arranged in said accumulation area; wherein said feeding path is formed by mutually superimposed feeding channels (33) connected to one another by descending branches along which the tubular winding cores fall by gravity from one feeding channel to the feeding channel below, the tubular winding cores accumulating along said feeding path and arranging themselves into contact each with the other; wherein a tubular winding cores conveyor (31A, 31B) is arranged along at least some of said feeding channels, developing from an entrance end to an exit end of the respective feeding channel (33); wherein an entrance elevator (11) is arranged so as to lift the tubular winding cores (A) at a height greater than said entrance (3) and to insert said tubular winding cores (A) in said feeding path; wherein the entrance elevator (11) comprises continuous flexible members (13) defining a lifting path for lifting the tubular winding cores (A), said flexible members (13) carrying supports (25) for the tubular winding cores; wherein said continuous flexible members (13) of the entrance elevator (11) are entrained at the upper end around upper guide wheels (15) and on the bottom by lower guide wheels (17); wherein said tubular winding cores (A) are picked up by said entrance elevator (11) in a position along an ascending branch of said continuous flexible members (13) and are lifted until the upper guide wheels (15); **characterized in that** said tubular winding cores are transferred from said ascending branch to a descending branch of said continuous flexible members (13); and that along the descending branch of the continuous flexible members (13) a plurality of uploading elements (29, 61X) are provided at different heights, at least the highest of which can be disabled so as to allow transferring of the tubular winding cores from the entrance elevator (11) to different heights of the accumulation area.

2. A storage unit as claimed in claim 1, **characterized in that** said descending branches are curved.

3. A storage unit as claimed in claim 1 or 2, **characterized by** comprising an exit elevator (65), arranged so as to pick up the tubular winding cores (A) from a lower end of said feeding path and to lift said tubular winding cores (A) at a greater height, where said exit (5) is located.

4. A storage unit as claimed in one or more of the previous claims, **characterized in that** said feeding path develops in a zigzag manner, from the top towards the bottom, the tubular winding cores being transferred from one to the other of said superimposed channels (33) moving in each channel and in the channel immediately below in opposite directions.

5. A storage unit as claimed in one or more of the previous claims, **characterized in that** each feeding channel (33) has an approximately rectilinear development.

6. A storage unit as claimed in one or more of the previous claims, **characterized in that** each feeding channel (33) is approximately horizontal.

7. A storage unit as claimed in one or more of the previous claims, **characterized in that** said tubular winding cores conveyors (31) are arranged in each of said feeding channels (33).

8. A storage unit as claimed in one or more of the previous claims, **characterized in that** each tubular winding cores conveyor comprises at least two parallel continuous flexible members (37), spaced from each other orthogonally to the direction of feed of the tubular winding cores (A) in the feeding channel (33).

9. A storage unit as claimed in one or more of the previous claims, **characterized in that** along each feeding channel (33) the tubular winding cores (A) move rolling by gravity, with the help of the respective tubular winding cores conveyor (31).

10. A storage unit as claimed in one or more of the previous claims, **characterized in that** said feeding channels (33) are formed by tubular winding cores conveyors (31) arranged according to two series of tubular winding cores conveyors (31A, 31B) forming respective comb-shaped structures; wherein the tubular winding cores conveyors (31A) of a first structure are arranged approximately horizontally and mutually parallel and spaced from one another; wherein the tubular winding cores conveyors (31B) of the second structure are arranged approximately horizontally and mutually parallel and spaced from one another in the same manner as the tubular winding cores conveyors (31A) of the first structure and being inserted therebetween; wherein respective profiles (61) are arranged opposite to said tubular winding cores conveyors, each profile defining a portion of a descending branch towards the tubular winding cores conveyor (31) below; and wherein the first structure supports the profiles (61) arranged opposite to the tubular winding cores conveyors (31B) supported by the second structure, and the second structure supports the profiles (61) arranged opposite to the tubular winding cores conveyors (31A) supported by the first structure.

11. A storage unit as claimed in claim 10, **characterized in that** said profiles (61) have an approximately circular shape.

12. A storage unit as claimed in one or more of the previous claims, **characterized in that** the last of said tubular winding cores conveyors (31C) is longer than the tubular winding cores conveyor (31) above, and extends to interfere with a lifting path of the exit elevator (65), so that the tubular winding cores (A) reaching the terminal end of said last tubular winding cores conveyor (31C) are picked up individually by said exit elevator (65).

13. An storage unit as claimed in any one of the preceding claims, **characterized in that** said uploading element or elements comprise each at least one slide intersecting the path of the tubular winding cores supported by said supports.

## Patentansprüche

1. Speichereinheit für röhrenförmige Wickelkerne (A), welche einen Einlass (3), einen Auslass (5) und einen Sammelbereich zwischen dem Einlass und dem Auslass umfasst, wobei in dem Sammelbereich ein Vorschubweg für die röhrenförmigen Wickelkerne ausgebildet ist; wobei der Vorschubweg durch übereinander angeordnete Vorschubkanäle (33) gebildet wird, die durch abfallende Zweige miteinander verbunden sind, entlang derer die röhrenförmigen Wickelkerne durch die Schwerkraft aus einem Vorschubkanal in den darunter liegenden Vorschubkanal fallen, wobei sich die röhrenförmigen Wickelkerne entlang des Vorschubweges ansammeln und sich von allein in Kontakt zueinander anordnen; wobei eine Fördereinrichtung (31A, 31B) für röhrenförmige Wickelkerne entlang zumindest einiger der Vorschubkanäle angeordnet ist und sich von einem Einlassende zu einem Auslassende des jeweiligen Vorschubkanals (33) erstreckt; wobei eine Einlasshubeinrichtung (11) derart angeordnet ist, dass sie die röhrenförmigen Wickelkerne (A) in eine höhere Höhe über dem Einlass (3) anhebt und die röhrenförmigen Wickelkerne (A) in den Vorschubweg einführt; wobei die Einlasshubeinrichtung (11) flexible Endloselemente (13) umfasst, die einen Hubweg zum Anheben der röhrenförmigen Wickelkerne (A) bestimmen, wobei die flexiblen Elemente (13) Träger (25) für die röhrenförmigen Wickelkerne tragen; wobei die flexiblen Endloselemente (13) der Einlasshubeinrichtung (11) am oberen Ende um obere Führungsräder (15) herum und unten durch untere Führungsräder (17) mitgenommen werden; wobei die röhrenförmigen Wickelkerne (A) durch die Einlasshubeinrichtung (11) in einer Stelle entlang eines aufsteigenden Zweigs der flexiblen Endloselemente (13) aufgenommen werden und bis zu den oberen Führungsrädern (15) angehoben werden; **dadurch gekennzeichnet, dass** die röhrenförmigen Wickelkerne von dem aufsteigenden Zweig zu einem absteigenden Zweig der flexiblen Endloselemente (13) überführt werden und dass entlang des absteigenden Zweigs der flexiblen Endloselemente (13) eine Mehrzahl von Aufladeelementen (29, 61X) in unterschiedlichen Höhen angeordnet sind, von denen zumindest das höchste deaktiviert werden kann, um so ein Befördern der röhrenförmigen Wickelkerne von der Einlasshubeinrichtung (11) auf unterschiedliche Höhen des Sammelbereichs zu ermöglichen.

2. Speichereinheit nach Anspruch 1, **dadurch gekennzeichnet, dass** die absteigenden Zweige gekrümmt sind.

3. Speichereinheit nach Anspruch 1 oder 2, **dadurch gekennzeichnet, dass** diese eine Auslasshubeinrichtung (65) umfasst, die derart angeordnet ist, dass sie die röhrenförmigen Wickelkerne (A) von einem unteren Ende des Vorschubweges aufnimmt und die röhrenförmige Wickelkerne (A) auf eine höhere Höhe anhebt, in welcher der Auslass (5) angeordnet ist.

4. Speichereinheit nach einem oder mehreren der vorhergehenden Ansprüche, **dadurch gekennzeichnet, dass** sich der Vorschubweg zickzackartig von oben nach unten erstreckt, wobei die röhrenförmigen Wickelkerne, die von einem zum anderen der übereinander angeordneten Kanäle übertragen werden (33), sich in einem jeweiligen Kanal und in dem unmittelbar darunter liegenden Kanal in entgegengesetzte Richtungen bewegen.

5. Speichereinheit nach einem oder mehreren der vorhergehenden Ansprüche, **dadurch gekennzeichnet, dass** jeder Vorschubkanal (33) eine annähernd geradlinige Erstreckung aufweist.

6. Speichereinheit nach einem oder mehreren der vorhergehenden Ansprüche, **dadurch gekennzeichnet, dass** jeder Vorschubkanal (33) annähernd horizontal ist.

7. Speichereinheit nach einem oder mehreren der vorhergehenden Ansprüche, **dadurch gekennzeichnet, dass** die Fördereinrichtungen (31) für röhrenförmige Wickelkerne in jedem der Vorschubkanäle (33) angeordnet sind.

8. Speichereinheit nach einem oder mehreren der vorhergehenden Ansprüche, **dadurch gekennzeichnet, dass** jede Fördereinrichtung für röhrenförmige Wickelkerne mindestens zwei parallele flexible Endloselemente (37) aufweist, die senkrecht zur Vorschubrichtung der röhrenförmigen Wickelkerne (A) in dem Vorschubkanal (33) voneinander beabstandet sind.

9. Speichereinheit nach einem oder mehreren der vorhergehenden Ansprüche, **dadurch gekennzeichnet, dass** sich die röhrenförmigen Wickelkerne (A) entlang eines jeweiligen Vorschubkanals (33) durch Schwerkraft rollend vorbewegen, unterstützt durch die jeweilige Fördereinrichtung (31) für röhrenförmige Wickelkerne.

10. Speichereinheit nach einem oder mehreren der vorhergehenden Ansprüche, **dadurch gekennzeichnet, dass** die Vorschubkanäle (33) durch Fördereinrichtungen (31) für röhrenförmige Wickelkerne gebildet sind, die entsprechend zwei Serien von Fördereinrichtungen für röhrenförmige Wickelkerne (31A, 31B) angeordnet sind, die jeweils kammförmige Strukturen bilden; wobei die Fördereinrichtungen für röhrenförmige Wickelkerne (31A) einer ersten Struktur in etwa horizontal und parallel zueinander und beabstandet voneinander angeordnet sind; wobei die Fördereinrichtungen für röhrenförmige Wickelkerne (31B) der zweiten Struktur in der gleichen Weise wie die Fördereinrichtungen für röhrenförmige Wickelkerne (31A) der ersten Struktur in etwa horizontal und parallel zueinander und beabstandet voneinander angeordnet sind und zwischen diesen eingefügt sind; wobei jeweilige Profile (61) gegenüberliegend zu den Fördereinrichtungen für röhrenförmige Wickelkerne angeordnet sind, wobei jedes Profil einen Abschnitt eines abfallenden Zweigs zu der darunter angeordneten Fördereinrichtung für röhrenförmige Wickelkerne bildet; und wobei die erste Struktur die Profile (61) hält, die gegenüber den von der zweiten Struktur gehaltenen Fördereinrichtungen für röhrenförmige Wickelkerne (31B) angeordnet sind, und die zweite Struktur die Profile (61) hält, die gegenüber den von der ersten Struktur gehaltenen Fördereinrichtungen für röhrenförmige Wickelkerne (31A) angeordnet sind.

11. Speichereinheit nach Anspruch 10, **dadurch gekennzeichnet, dass** die Profile (61) eine annähernd kreisrunde Form aufweisen.

12. Speichereinheit nach einem oder mehreren der vorhergehenden Ansprüche, **dadurch gekennzeichnet, dass** die letzte der Fördereinrichtungen für röhrenförmige Wickelkerne (31C) länger ist als die Fördereinrichtungen für röhrenförmige Wickelkerne darüber und sich derart erstreckt, dass sie in den Hubweg der Auslasshubeinrichtung (65) eingreift, so dass die röhrenförmigen Wickelkerne (A), die den Endpunkt der letzten Fördereinrichtung für röhrenförmige Wickelkerne (31C) erreichen, von der Auslasshubeinrichtung (65) einzeln aufgenommen werden.

13. Speichereinheit nach einem der vorhergehenden Ansprüche, **dadurch gekennzeichnet, dass** das Aufladeelement oder die Aufladeelemente jeweils mindestens einen Schlitten umfassen, der in den Weg der von den Trägern getragenen röhrenförmigen Wickelkerne eingreift.

## Revendications

1. Une unité de stockage pour noyaux d'enroulement tubulaires (A), comprenant une entrée (3), une sortie (2) et une zone d'accumulation entre ladite entrée et ladite sortie, un chemin d'avancement pour lesdits noyaux d'enroulement tubulaires étant agencé dans ladite zone d'accumulation ; dans lequel ledit chemin d'avancement est formé de canaux d'avancement (33) se superposant les uns aux autres, reliés les uns aux autres par des branches descendantes le long desquelles les noyaux d'enroulement tubulaires tombent par gravité d'un canal d'avancement au canal d'avancement situé en dessous, les noyaux d'enroulement tubulaires s'accumulant le long dudit chemin d'avancement et se mettant en contact eux-mêmes les uns avec les autres ; dans lequel un transporteur de noyaux d'enroulement tubulaires (31 A, 31B) est agencé le long d'au moins certains desdits canaux d'avancement, s'étendant depuis une extrémité d'entrée jusqu'à une extrémité de sortie du canal d'avancement respectif (33) ; dans lequel un élévateur d'entrée (11) est agencé de manière à soulever les noyaux d'enroulement tubulaires (A) à une hauteur supérieure à celle de ladite entrée (3) et à insérer lesdits noyaux d'enroulement tubulaires (A) dans ledit chemin d'avancement ; dans lequel l'élévateur d'entrée (11) comprend des organes flexibles continus (13) définissant un chemin de levage pour soulever les noyaux d'enroulement tubulaires ; dans lequel lesdits organes flexibles continus (13) de l'élévateur d'entrée (11) sont entraînés à l'extrémité supérieure autour de roues de guidage supérieure (15) et en bas par des roues de guidage inférieures (17) ; dans lequel lesdits noyaux d'enroulement tubulaires (A) sont ramassés par ledit élévateur d'entrée (11) à un endroit le long d'une branche ascendante desdits organes flexibles continus (13) et sont soulevés jusqu'aux roues de guidage supérieures (15) ; **caractérisée en ce que** lesdits noyaux d'enroulement tubulaires sont transférés de ladite branche ascendante vers une branche descendante desdits organes flexibles continus (13) ; et **en ce que** le long de la branche descendante des organes flexibles continus (13) une pluralité d'éléments de chargement (29, 61X) sont prévus à différentes hauteurs, dont le plus élevé peut être désactivé de manière à permettre le transfert des noyaux d'enroulement tubulaires de l'élévateur d'entrée (11) à différentes hauteurs de la zone d'accumulation.

2. Une unité de stockage selon la revendication 1, **caractérisée en ce que** lesdites branches descendantes sont incurvées.

3. Une unité de stockage selon la revendication 1 ou 2, **caractérisée en ce qu'**elle comprend un élévateur de sortie (65), agencé de manière à ramasser les noyaux d'enroulement tubulaires (A) d'une extrémité inférieure dudit chemin d'avancement et pour soulever lesdits noyaux d'enroulement tubulaires (A) à une hauteur supérieure, à laquelle ladite sortie (5) est située.

4. Une unité de stockage selon une ou plusieurs des revendications précédentes, **caractérisée en ce que** ledit chemin d'avancement s'étend en zigzag, du haut vers le bas, les noyaux d'enroulement tubulaires étant transférés de l'un à l'autre desdits canaux superposés (33) se déplaçant dans chaque canal et dans le canal situé immédiatement en dessous dans des directions opposées.

5. Une unité de stockage selon une ou plusieurs des revendications précédentes, **caractérisée en ce que** chaque canal d'avancement (33) a une extension approximativement rectiligne.

6. Une unité de stockage selon une ou plusieurs des revendications précédentes, **caractérisée en ce que** chaque canal d'avancement (33) est approximativement horizontal.

7. Une unité de stockage selon une ou plusieurs des revendications précédentes, **caractérisée en ce que** lesdits transporteurs de noyaux d'enroulement tubulaires (31) sont agencés dans chacun desdits canaux d'avancement (33).

8. Une unité de stockage selon une ou plusieurs des revendications précédentes, **caractérisée en ce que** chaque transporteur de noyaux d'enroulement tubulaires comprend au moins deux organes flexibles continus parallèles (37), espacés l'un de l'autre orthogonalement à la direction d'alimentation des noyaux d'enroulement tubulaires (A) dans le canal d'avancement (33).

9. Une unité de stockage selon un ou plusieurs des revendications précédentes, **caractérisée en ce que** le long de chaque canal d'avancement (33), les noyaux d'enroulement tubulaires (A) se déplacent en roulant sous l'effet de la gravité, à l'aide du transporteur de noyaux d'enroulement tubulaires respectif (31).

10. Une unité de stockage selon une ou plusieurs des revendications précédentes, **caractérisée en ce que** lesdits canaux d'avancement (33) sont formés par des convoyeurs de noyaux d'enroulement tubulaires (31) agencés suivant deux séries de transporteurs de noyaux d'enroulement tubulaires (31A, 31B) formant des structures respectives en forme de peigne ; dans lequel les transporteurs de noyaux d'enroulement tubulaires (31A) d'une première structure sont agencés approximativement horizontalement et parallèlement les uns aux autres et de manière espacée les uns des autres ; dans lequel les transporteurs de noyaux d'enroulement tubulaires (31B) de la seconde structure sont agencés de manière approximativement horizontale et parallèlement les uns aux autres et espacés les uns des autres de la même manière que les transporteurs de noyaux d'enroulement tubulaires (31A) de la première structure et en étant insérés entre eux ; dans lesquels les profils respectifs (61) sont agencés de manière opposée auxdits transporteurs de noyaux d'enroulement tubulaires, chaque profil formant une partie d'une branche descendantes vers le transporteur de noyaux d'enroulement tubulaires (31) situé en dessous ; et dans lequel la première structure supporte les profils (61) agencés en face des transporteurs (31B) de noyaux d'enroulement tubulaires supportés par la seconde structure et la seconde structure supporte les profils (61) agencés en face des transporteurs de noyaux d'enroulement tubulaires (31A) supportés par la première structure.

11. Une unité de stockage selon la revendication 10, **caractérisée en ce que** lesdits profils (61) ont une forme approximativement circulaire.

12. Une unité de stockage selon une plusieurs des revendications précédentes, **caractérisée en ce que** le dernier desdits noyaux d'enroulement tubulaires (31C) est plus long que le transporteur de noyaux d'enroulement tubulaires (31) situé au-dessus, et s'étend pour interférer avec un chemin de levage de l'élévateur de sortie (65), de sorte que les noyaux d'enroulement tubulaires (A) atteignant l'extrémité terminale dudit transporteur de noyaux d'enroulement tubulaires (31C) soient ramassés individuellement par ledit élévateur de sortie (65).

13. Une unité de stockage selon l'une quelconque des revendications précédentes, **caractérisée en ce que** ledit ou lesdits élément(s) de chargement comprend/comprennent chacun au moins une glissière croisant le chemin des noyaux d'enroulement tubulaires supportés par lesdits supports.
